# EUROPEAN PATENT APPLICATION

(11) **EP 0 981 100 A1**
(43) Date of publication of application: **23.02.2000**
(21) Application number: 98202595.9
(22) Date of filing: 31.07.1998
(51) Int. Cl.: G06F 17/60

(54) **A method for interrelating safety related documents of a production plant**

(71) Applicant: Westinghouse Energy Systems Europe (WESE), 1070 Brussels (BE)
(72) Inventor: Cantineau, Bertrand, 1070 Brussels (BE); Boucau, Joseph, 1070 Brussels (BE); Blondiaux, Pierre, 1070 Brussels (BE)
(74) Representative: Quintelier, Claude

(57) **Abstract**

A method for interrelating safety related documents of a production plant, in particular a nuclear power plant, characterised in that said method comprises the following steps:
- identifying activity sources producing an output product which could cause a harmful impact on the environment as well as barriers surrounding said activity sources;
- establishing a fault tree following a cause/consequence activity release path along which the output product would reach said environment, said fault tree comprising said barriers and a set of logic gates and being established by progressive identification along said path of failure causes which could cause the considered barrier to release said output product, each logic gate comprises the logical operator defining the logical link between the failure causes associated with the considered barrier; and
forming said documents by linking to each gate a description of said failure causes of the associated gate and at least one functional requirement field describing functions required for eliminating said failure cause.

## Description

The present invention relates to a method for interrelating safety related documents of a production plant, in particular a nuclear power plant.

In order to safely operate a production plant, such as for example a nuclear power plant, a chemical production plant, a petroleum refinery etc..., safety documents have to be considered as well in the construction of the plant as in the operation thereof. Those safety documents including system descriptions, procedures, technical specifications or safety regulations are generally stored randomly at the production plant. These documents are consulted for plant operations or in case that modifications or maintenance have to be applied to the plant or when failures arise in the production.

A drawback of the present document system is that there is no link between the different documents of a same production plant. The impact of changes or measures applied to one component is not considered with respect to the other components. Therefore the actual document system does not allow a systematic and structured maintenance of the plant.

It is an object of the present invention to provide a method for interrelating safety related documents of a production plant which allows a systematic and structured maintenance and set-up of the production plant with capabilities to monitor the impact of changes in the plant, while maintaining an up-to-date document system which implements applied changes.

A method according to the present invention is therefore characterised in that said method comprises the following steps:
- identifying activity sources producing an output product which could cause a harmful impact on the environment as well as barriers surrounding said activity sources;
- establishing a fault tree following a cause/consequence activity release path along which the output product would reach said environment, said fault tree comprising said barriers and a set of logic gates and being established by progressive identification along said path of failure causes which could cause the considered barrier to release said output product, each logic gate comprises the logical operator defining the logical link between the failure causes associated with the considered barrier;
- forming said documents by linking to each gate a description of said failure causes of the associated gate and at least one functional requirement field describing functions required for eliminating said failure cause.
By identifying the activity sources, the different surrounding barriers which could cause a harmful impact on the environment are inventoried. The different activity release paths are built up following a cause/consequence logic. The identified barriers and sources are then placed along their respective activity release paths. This enables to associate the failure causes of the considered barrier with the cause/consequence logic. The fault tree is then built up by linking together the different activity release paths. The gate being the logic operator defining the link between consequence and cause. By linking to each gate the description and at least one functional requirement field, an association between the documents and the gate is obtained. The establishment of the functional requirements enables to eliminate the failure cause and thus avoids its immediate consequences. As the functional requirements are included in the contents of the documents, the cause/consequence logic of the fault tree is introduced into the documents, which on its turn enables to have the interrelation between the documents.

A first preferred embodiment of a method according to the present invention is characterised in that said activity release path is determined by starting from the environment and going towards a core of the production plant. As a harmful impact on the environment is the ultimate undesired consequence, starting from the environment enables to go down from the ultimate undesired consequence to the real cause by stepwise consideration of each barrier and source which could be the origin of a failure.

A second preferred embodiment wherein said method is applied to a production plant comprising a combination of at least two interrelated barriers which together perform a production process and wherein said identification is applied for each of said barriers, and wherein the interrelation between said barriers is considered upon establishing said fault tree. If two components are interrelated, a failure cause in one of the components could induce a failure in the other component. By considering this interrelation in establishing the fault tree, the interrelation will be present in the documents.

A third preferred embodiment of a method according to the present invention is characterised in that said fault tree is stored in a digital relational database memory. This enables a digital processing.

A fourth preferred embodiment of a method according to the present invention is characterised in that to each functional requirement field a sub-field is annexed indicating a compliance extent describing how the associated requirement is met. Requirement and compliance are interconnected in such a manner.

A fifth preferred embodiment of a method according to the present invention is characterised in that to each functional requirement a text tree is linked comprising at least one of the following text fields:
(i) a system text field describing system requirements contributing to mitigate said failure cause associated to the considered gate;
(ii) an analysis text field describing analysis requirements for quantifying the failure consequences;
(iii) a regulation text field indicating the imposed regulatory requirements;
(iv) a technical specification text field listing associated technical specifications;
(v) a procedure text field defining the procedure which contributes to mitigate the failure cause. This enables to classify the documents according to a set of text fields, each having a particular item.

The invention will now be described in more details by means of the drawings illustrating a preferred embodiment of the invention.

In the drawings:
figure 1 illustrates schematically a nuclear power plant;
figure 2 illustrates the concept of barriers and sources applied to a nuclear power plant;
figure 3 illustrates the fault tree concept;
figure 4 illustrates the link between a fault tree and the gate functional structure; and
figure 5 illustrates the gate functional requirement structure.

In the description given hereunder reference will be made to a nuclear power plant as a particular example of a production plant where the method of the present invention is applicable. It will however be clear that the method of the present invention is not limited to nuclear power plants and is applicable to all kind of power plants such as chemical production plant, petroleum refinery, mining etc.... which could be origin of a harmful impact on the environment and therefore are subject to strict building constraints and operation regulations.

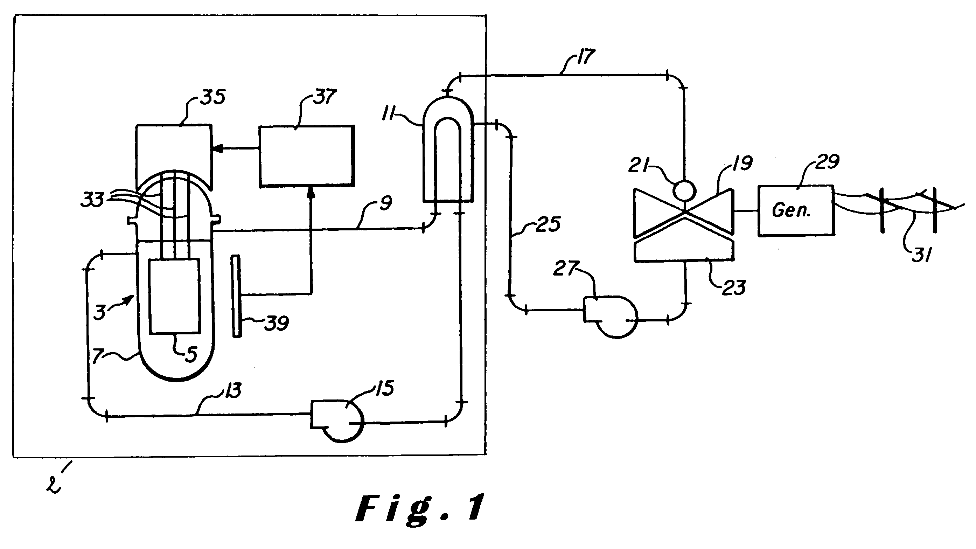

Figure 1 illustrates schematically a nuclear power plant comprising a pressurised water reactor 3 having a reactor core 5 mounted inside a pressure vessel 7. The reactor core 5 contains fissionable material in which sustained fission reactions occur to generate heat which is absorbed by a reactor coolant in the form of light water passing through the core 5. The reactor coolant circulates in a primary loop which includes a hot leg conduit 9 for conveying the heated reactor coolant from the reactor core 5 to the primary side of a steam generator 11 where the heat is transferred to feed water on the secondary side to produce steam. The reactor coolant is returned to the reactor core 5 through a cold leg conduit 13 by a reactor coolant pump 15. While one primary loop is shown in figure 1 for illustration purpose, in practice a typical pressurised water reactor has two or more primary loops each supplying heated reactor coolant from the core 5 to its own steam generator.

The reactivity of the core 5 is also regulated by control rods 33 made of neutron absorbing material which are vertically inserted into the core 5 from above. The control rods 33 are positioned by a rod drive unit 35 under control of a control device 37 connected to a neutron detector 39.

The steam produced in the steam generator 11 is circulated in a secondary loop which includes steam header 17 which supplies steam to a turbine 19 through a throttle valve 21. Vitiated steam from the turbine is condensed in a condenser 23 and, in a very simplified way, the condensate is returned to the steam generator 11 through feedwater conduit 25 by a feedwater pump 27. The turbine 19 drives a generator 29 for producing electricity which is applied to a power grid 31 representing the load. The generator 29 also supplies electric power to the plant including the reactor coolant and feedwater pumps 15 and 27 respectively.

To prevent fission product releases to the environment in case of an accident, the primary circuit and steam generators are located in a containment building 2.

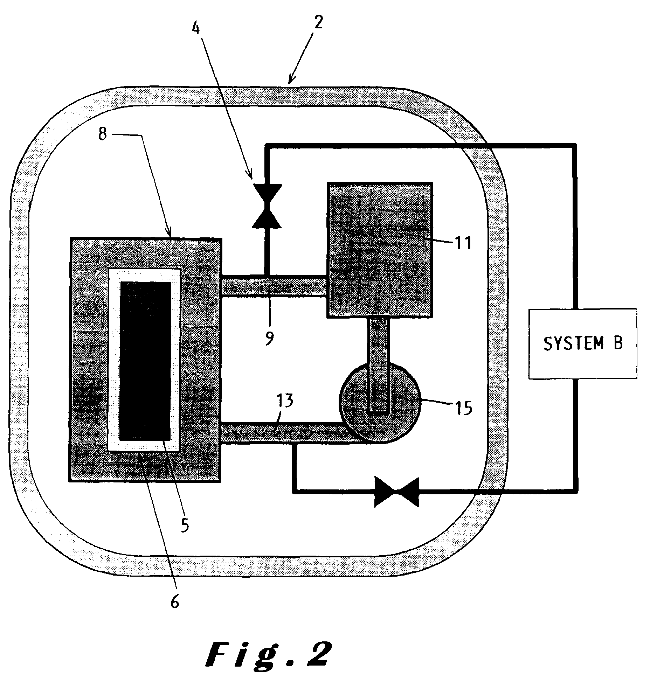

Figure 2 illustrates the concept of sources and barriers applied to the nuclear power plant shown in figure 1. An activity source is a generator which generates an output product. In the nuclear power plant the reactor core 5 is a generator of nuclear radiation which, when it would leave the core, would cause a harmful impact on the environment. In order to maintain the radiation inside the core a fuel cladding 6 surrounds the core. The fuel cladding thus forms a barrier for the radiation inside the core. The term barrier thus signifies a surrounding applied around the source in order to contain the output product within the volume delimited by the barrier. The reactor coolant 8 circulates around the fuel cladding and can on its turn form a source, for example when radiation from the core leaks through the fuel cladding into the reactor coolant. The conduits 9 and 13 in which the reactor coolant circulates, the steam generator 11 and the pump 15 are also barriers for the reactor coolant as source. The containment building 2 is a barrier for the primary circuit and the steam generators.

It should be noted that other systems, such as the system B comprising the turbine 19, could become radioactive due to a leak in the primary circuit and thus also become activity sources due to their connections with other adjacent barriers.

In the considered example of a nuclear power plant, the output product which could cause a harmful impact on the environment, is the radioactive release to the environment. Starting from this consideration the different barriers and sources which could lead to such a release have now to be identified. Returning to figure 2, the first barriers which are encountered are the containment building 2 and the system B. A radioactive release to the environment could be caused by a leak in the wall of the containment building or the system B. However if there is a leak in the wall of the containment building, the inner side of the containment building must act as a radioactive source in order that radioactive radiation could escape via that leak in the wall towards the environment. In order that the inner side of the containment building becomes a radioactive source, a radioactive release must have occurred at the systems situated inside the containment building. So the barriers formed by reactor coolant circuit, the circuits 9, 13, the pump 15 or the steam generator 11 could leak thus introducing a radioactive release inside the containment building. A leak at the barrier formed by the reactor coolant circuit signifies that the reactor coolant has become a radioactive source probably because a leak is present in the barrier formed by the fuel cladding causing a radioactive radiation from the core to cross the fuel cladding and reach the reactor coolant.

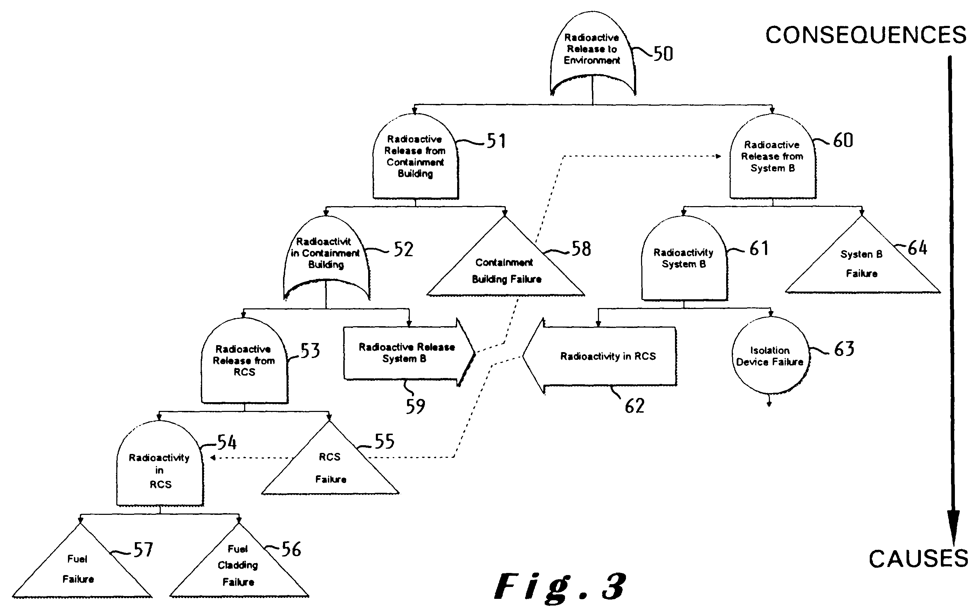

By processing in such a way, the different sources and their surrounding barriers are identified. Those different barriers will now be logically organised in a fault tree such as illustrated in figure 3. For establishing this fault tree the same cause/consequence activity release paths were followed as described herebefore, i.e. starting from the environment and going towards the core of the reactor. Of course other paths could be followed, for example in the opposite direction. However starting from the environment and going down to the core has the advantage that all the barriers and sources are systematically considered without prematurely jumping to a particular detailed failure cause.

The fault tree comprises a set of logic gates such as for example AND, OR, stop gates, each gate indicating the logic operator defining the logical link between the failure cause and the associated barrier. The fault tree thus integrates the different activity release paths and identifies the different barriers.

One of the cause/consequence activity release paths that starts from the environment towards the core of the reactor is given hereunder each time with the associated gate.

| Logical gate | Ref. in Fig. 3 | Gate title |
|---|---|---|
| OR | 50 | radioactive release to environment |
| AND | 51 | radioactive release from containment building |
| OR | 52 | radioactivity in containment building |
| AND | 53 | radioactive release from reactor coolant system |
| AND | 54 | radioactivity in reactor coolant system |
| Connection | 55 | reactor coolant failure |
| Connection | 56 | fuel cladding failure |
| Connection | 57 | fuel failure |

The logic gate assigned to each failure cause indicates the logical operator defining the logical link between the failure cause associated with the considered barrier. So for example the logic AND gate is used for gate 51 since the barrier formed by the containment building can only be a failure cause if the containment building itself and there is a radioactive release inside the containment building On the other hand gate 50 is an Or gate as the barrier formed by the environment is a failure cause if either the containment building or the annex system B is a radioactive source.

Another cause consequence activity release path illustrated in figure 3 deals with the annex system B and comprises the logic AND gates 60 an 61 indicating respectively a radioactive release from system B and a radioactivity in system B. The latter could be caused via a connection to the reactor coolant system which is indicated by the connection gates 62 and 55.

Gate 63 is a stop gate assigned to a barrier associated to an isolation device failure. The stop gate is indicative for the lowest level of failure cause in a selected path

The other gates indicated in figure 3 are:
58: containment building failure
59: release to system B
64: system B failure

In the example given in figure 3, the number of considered barriers has been limited for the sake of clarity. However a much more detailed set of barriers and their allocated gates could be used for building of the fault tree which is composed of the different gates. An example of a more detailed set of barriers and their gates is given hereunder. In this example a same path has been selected.

| Logical type | Gate Title |
|---|---|
| Or | Activity in Containment |
| Or | Activity in Reactor Coolant System |
| And | Fuel Cladding Activity Transfer Tree |
| Or | Fuel Cladding Barrier Integrity Failure |
| Or | Fuel Cladding Melting |
| Or | Fuel Cladding Temperature too high |
| Or | Heat Transfer from Cladding to Coolant too low |
| Or | Cladding-Coolant Heat Transfer Coefficient too low |
| Or | Fuel Cladding Surface Thermal Insulation |
| And | Steam Insulating Layer Formation |
| Or | Core Coolant Departure from Nucleate Boiling |
| Or | Reactor Coolant System Pressure too low |
| Or | Reactor Coolant System Pressure Control Failure |
| Or | Inadvertent Pressurizer Safety Valve Opening |
| Stop | Reactor Coolant System - Pressurizer Safety Valve Functional Failure |

It can be observed that a very high level operational issue can be split in very detailed causes, at the component level. In a general fashion, it is possible, by going up to the consequences in a fault tree or a set of fault trees, to determine all the effects of a component malfunction in the plant. The fault tree is developed as far down as possible. This development is however limited down at component level, i.e. until the stop gate is attributed.

It has to be noted that the fault tree development is performed on a purely qualitative basis, no probability is associated to the failure modes of each considered barrier, in order to avoid an early exclusion of one failure path. Should a failure mode be excluded on probabilistic grounds, the efficiency of the present method will be adversely affected.

The gate title should in general be a process or a device with a qualifier, such as "radioactivity in reactor coolant system". It is also possible to use transition gates i.e. gates not related to the mechanics of a failure cause. The latter facilitates the comprehension of the fault tree as the gates are grouped into an Or gate comprising a set of gates. The use of transition gates should be kept as small as possible in order to avoid cluttering of the data base with gates of little technical interest. A typical use of a transition gate is to introduce failure causes which are specific to either the plant or a system generating mode.

A fault tree terminal end can be a barrier or another existing fault tree. The criterion to stop a fault tree development by referring to other fault trees is when the number of gates of the tree makes it difficult to follow the various activity release paths, or when it is anticipated that such another tree will be used more than once.

Referring back to figure 3 it is illustrated how the different paths are linked together via the top gate or at intermediate level gates, since the followed paths along these links always represent a series of consequences/causes. The fault tree associated with the various barriers and with the systems that support those barriers are stored in a relational database that maintains the logical links between the gates. Each failure cause, identified by a unique gate, is linked to a description describing the latter and at least one functional requirement field describing measures that will prevent the failure from occurring. These description and functional requirements are stored in a database in the form of structured text fragments.

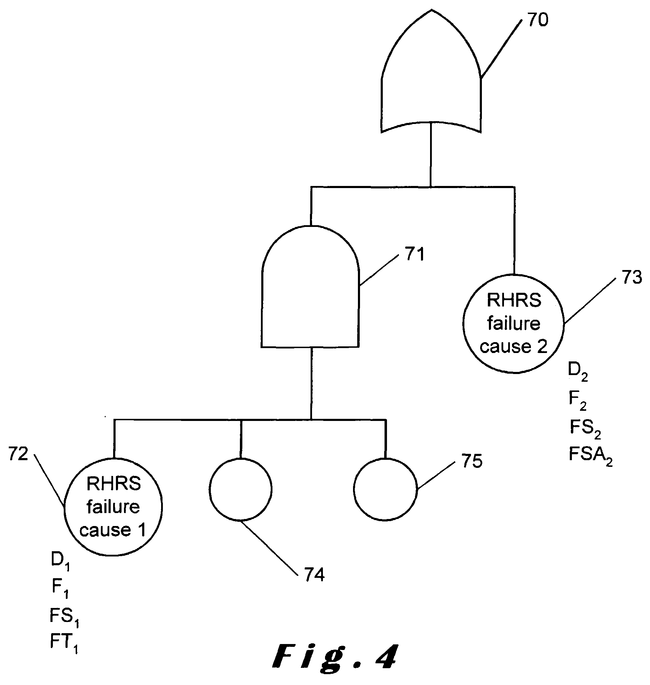

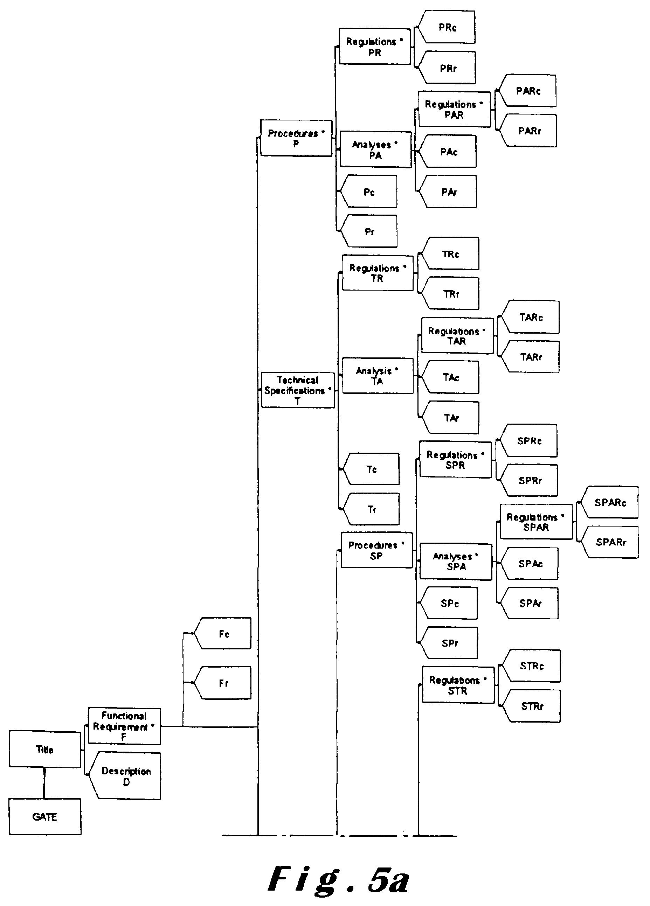

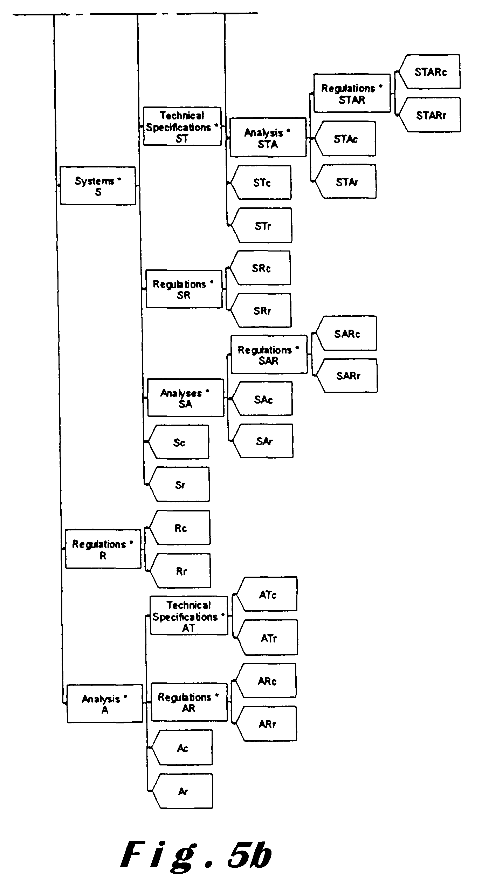

Figure 4 illustrates how the description and functional requirements are linked to the gates of the fault tree. For the sake of clarity the fault tree has been reduced to a simplified example including top OR gate 70 linked to a stop gate 72 and to stop gates 73, 74 and 75 via AND gate 71. Suppose now that stop gate 72 is associated with an RHRS (residual heat removal system). To the RHRS failure cause 1 of stop gate 72 is associated a description D₁ a functional requirement field F₁, a system requirement field FS₁ and a technical specification field FT₁. To the RHRS failure cause 2 of stop gate 73 is linked a description D₂, a functional requirement field F₂, a system field FS₂ and a system analysis field FSA₂. The signification of each of those fields will be given hereunder with respect to the description of figure 5. The different functional requirements (F₁, F₂, ...) are now stored in a relational database management system, as well as the system requirements (FS₁, FS₂, ....), the technical specification requirements (FT₁, ...) and the system analysis requirements (FSA₁, FSA₂....).The assignment of FS₁ to gate 73 and FS₂ to gate 72 thus causes those gates to point towards the system requirements stored in the database. In such a manner the different system requirements of the different gates are grouped. As now the gates are linked to barriers and sources, this signifies that the system requirements for the different barriers and sources are linked together. So, when the system associated with the barrier linked to gate 73 is modified or is the origin of a failure cause, the link via the system requirements will immediately enable to list the different system requirements. In the present example gate 72, which is also an RHR stop gate will be immediately retrieved and the consequences of a failure or a modification to gate 73 can directly also be estimated for gate 72.

The gate functional requirement structure is illustrated by way of example in figure 5. As already mentioned to each gate (G) is linked a description (D) of the failure cause associated with the considered gate. The description field describes the physical failure cause and provides a definition of the technical nature of the gate. The gate type and title can also be introduced in the description field. Examples of description fields applied to a nuclear power plant are given hereunder.

| **RCS (Reactor Coolant System) Fluid Inventory too low** | |
|---|---|
| Gate properties : | |
| Barrier | RCS Boundary |
| BPSF (Barrier Protective Safety Function) | Heat Removal |
| System | RCS |
| Gate type | top gate |

### (D) Description

An inadequate amount of coolant water in the RCS induces the risk of exceeding acceptable limits of the fuel cladding temperature and of fuel cladding barrier integrity failure. Physically, the mechanism can be explained by the following phenomena:
Considering given levels of thermal power produced by the core, of heat removed by the steam generators, and of reactor coolant flow (as imposed by the primary pumps or by natural circulation), should the mass of water present in the reactor coolant system be reduced, this smaller amount of core coolant would entail at one point in time the given amount of heat produced by the core. The average specific enthalpy of this smaller amount of coolant water will thus increase. This situation will also induce a higher core coolant specific inlet enthalpy, and therefore a potentially excessive local core coolant specific enthalpy, as per the equation provided in Local Core Coolant Specific Enthalpy Too High, of the Fuel Cladding Barrier Integrity Tree. This scenario can eventually lead to the presence of a large quantity of steam in the reactor vessel, to core uncovering, and thereby to excessive fuel cladding temperature.

| **RCS Piping Fatigue & Ratcheting** | |
|---|---|
| Gate Properties: | |
| Barrier | RCS |
| BPSF | System Integrity |
| System | RCS |
| Attribute | Cycling and Fatigue |
| Gate type | Group Stop Gate |

### (D) Description

Fatigue and Ratcheting are structural failure modes that may appear when a structure or component is subjected to cyclically varying stresses.
FATIGUE is the progressive localised permanent structural change that occurs in a material subjected to repeated or fluctuating strains at stresses having a maximum value less than the tensile strength of the material. Fatigue may culminate in cracks or fracture after a sufficient number of fluctuations. Fatigue fractures are caused by the simultaneous action of cyclic stress, tensile stress an plastic strain. If any one of these is not present, fatigue cracking will not initiate and propagate. The cyclic stress starts the crack; the tensile stress produces crack growth. The process may be considered as consisting of three stages:
1. Initial fatigue damage leading to crack initiation
2. Crack propagation until the remaining uncracked cross section of a part becomes too weak to carry the loads imposed
3. Final, sudden fracture of the remaining cross section
RATCHETING is the progressive distortion produced by a steady-state stress superimposed by an accumulation of cyclic plastic strain acting in a transverse direction. In ratcheting, an oscillating load (or a cyclic variation of temperature) strains the material beyond the yield point on alternate sides of a single member, or on alternate members of a structure, during each half-cycle. With succeeding cycles, plastic strain accumulates, with the result that one or more of the overall dimensions of the member (or the structure) change relatively uniformly along the direction of steady-state stress. Ratcheting may ultimately result in ductile fracture or in failure by low-cycle fatigue.

To each gate at least one functional requirement field (F) is also linked. The functional requirement fields describe functions required for eliminating the failure cause associated to the considered gate. Functional requirements are formulated as if for the construction of an ideal plant. Preferably to each functional requirement field (Fr) a subfield is annexed indicating a compliance extend (F_{c}) describing how the associated requirement is met for the considered plant. If several consequences exist for the same gate, Fr's should be created for each.

For the examples given here before, the functional requirements are given hereunder.

### RCS Fluid Inventory Too Low

### (F1) Functional Requirements

### Requirement Property : Operating Function

### (F1.r) Requirement Description

Means shall be provided to ensure, in normal conditions, the availability of a sufficient water (inventory) in the RCS, in order to avoid excessive heat up of the primary coolant, and the consequences thereof. Leaks resulting from the rupture of small conducts shall be compensated.

### RCS Piping Fatigue & Ratcheting

### (F1) Functional Requirement

### Requirement Property : Safety Function

### (F1.r) Requirement Description

Measures shall be taken to ensure that the pressure retaining components of the RCS will not experience failure by fatigue or ratcheting during the projected lifetime of the plant.

The compliance field (F_{c}) at this stage is a combination of the compliance of the other annexed fields which will be described hereinafter or just one field. The compliance status bit of the requirement description will be the lowest compliance bit of all considered fields.

Once the description (D) and the functional requirement (F) have been linked to each of the gates, a text tree is linked to each functional requirement in order to provide a more detailed functional requirement. The text tree comprises at least one of the following text fields :
(i) a system text field(S) describing system requirements contributing to mitigate the failure cause associated to the considered gate. A system is a combination of two or more interrelated components that performs a specific function related to plant operation and safety. A system may perform a function such as control, monitoring, electrical, mechanical or structural.
(ii) an analysis text (A) field describing analysis requirements for quantifying the failure consequences. This text field comprises also an analysis dedicated to the detailed system design.
(iii) a regulation text field (R) indicating the imposed regulatory requirements. Those regulatory requirements comprise any document including mandatory requirements set forth by the Safety Authority such as code of Federal Regulations Regulatory Guides.
(iv) a technical specification text field (T)listing associated technical specifications; which include items pertaining to safety limits, limiting safety and control systems setting as well as limiting conditions for operation. The main input sources to the technical specification are the accident analysis, system descriptions and post-accident recovery procedures.
(v) a procedure text field (P) defining the procedure which contributes to mitigate the failure cause. A procedure is defined as any document, with the exclusion of the technical specifications, which provides instructions to the plant personnel for the safe operation, maintenance and testing of the plant during operational conditions.

In figure 5 each of the described text fields are shown. It will however be clear that the choice of five text fields is arbitrary and that more or less text fields could be considered depending on the definition attributed to the text fields. As is also illustrated in figure 5 to each of the text fields, sub-fields can again be annexed up to several sub-layers. A distinction between requirements and compliance is possible at each sub-level. The branch from a textfield to a sub-field will be decided by the contents of the description and the functional requirements of the considered gate. The method according to the present invention does not restrict the number of textfields and sub-fields. More fields can be created depending on the considered production plant. For example a field could be created for components if this was considered to be useful. Each textfield is linked to a network of sub-fields covering in a systematic and structural way the associated requirements. The different fields will serve to support the various documents of the reconstituted plant design basis.

The text fields are used to generate operational and safety related documents. In such a manner the method according to the present invention enables to link the plant data required for operation in a structured manner. Due to the fact that the functional requirement fields point to the different sub-fields, a unique link is established between the functional requirements contained in the text tree and the documents required for plant operation.

The contents of the different sub-fields and their extension to further sub-fields will now be illustrated by means of the examples given hereunder. Going back to the preceding example of RCS piping fatigue and Ratcheting the following sub-fields are linked to the functional requirement field F1r.

### F1S1 -Systems

### F1S1r - Requirement description

In order to ensure that the RCS piping is operating within its fatigue design basis, and in order to facilitate lifetime predictions for its components for preventive maintenance or replacement, a system shall be provided that monitors and records the occurrence, type and magnitude of pressure and temperature transients in the RCS.

### F1S1c - Compliance

- Compliance Status :: YES
- Compliance Statement :: the plant transient monitoring system fulfils this requirement.

### F1S1R1 - Regulations

### F1S1R1r - Requirement description

The Swedish Nuclear Power Inspectorate's Regulations Concerning Structural Components in Nuclear Installations, states "Structural components may not be subjected to more pressure fluctuations, mechanical loads ant thermal variations than form the basis for their design. If the number of such loading transients exceeds the number which forms the basis for the design, or if larger load variations of other types of loading occur, measures must be taken without delay to determine that the safety levels continue to be adequate."

### F1S1P1 - Procedures

### F1S1P1r - Requirement description

Procedures are required to cover the following :
- operate the above mentioned transient monitoring system
- compare actually recorded transients against design transients
- define actions if transients are found to occur at a higher rate of occurrence than anticipated or with higher magnitudes than anticipated
- evaluate the remaining margin against fatigue failure

### F1S1P1c - Compliance

- Compliance Status :: YES
- Compliance Statement :: the plant procedure number P123 dealing with the operation and use of the transient monitoring system fulfils these requirements

### F1S2 - Systems

### F1S2r - Requirement description

Systems are required to monitor for leaks across normally closed isolation valves at interfaces between the RCS System and auxiliary systems.

### F1S2c - Compliance

- Compliance Status :: YES
- Compliance Statement :: the temperature monitoring system provides an indication of reactor coolant into manually closed systems.

### F1S2A1 - Analysis

### F1S2A1r - Requirement description

An analysis must be performed to identify the RCS isolation valves that require leak monitoring.

### F1S2A1c - Compliance

- Compliance Status :: YES
- Compliance Statement :: the analysis is summarised in appendix to the procedure P999. The procedure P999 relates to an operation and use of the valve leak monitoring system.

### F1S2P1 - Procedures

### F1S2P1r - Requirement description

Procedures are required to operate the above mentioned valve leak monitoring systems and to define corrective actions in the case leaks are discovered.

### F1S2P1c - Compliance

- Compliance Status :: YES
- Compliance Statement :: the plant procedure P999 fulfils these requirements

### F1A1 - Analysis

### F1A1r - Requirement description

Thermohydraulic analyses are required in order to generate pressure and temperature transients (RCS TRANSIENTS) suitable as the basis of the fatigue design of RCS piping and equipment.
The number of events for each transient and the number of load and stress cycles per event and for events in combination shall be included. All transients such as start-up and shutdown operations, power level changes, emergency and recovery conditions, switching operations (i.e., start-up or shutdown of one or more coolant loops), control system or other system malfunctions, component malfunctions, transients resulting from single operator errors, in-service hydrostatic tests, seismic events, that are contained in the Code-required "Design Specifications" for the components of the reactor coolant pressure boundary shall be specified. The transient conditions selected for fatigue evaluation shall be based upon a conservative estimate of the magnitude and frequency of the temperature and pressure conditions resulting from those transients.

### F1A2-Analysis

### F1A2r - Requirement description

Analyses shall be performed for piping of the RCS in order to show that failure due to fatigue will not occur during the plant lifetime, considering all anticipated alternating loading conditions.
The fatigue analysis should consider the following types of loading conditions :
- Pressure transients
- Waterhammer
- Earthquake
- Vibration
- Thermal transients
- RCS thermal operating modes
- Mini-flow transients
- Thermal stratification and striping
- Streaming
- Piping anchor motion

### F1A2R1 - Regulations

### F1A2R1r - Requirement description

In order to ensure that the analysis of fatigue and ratcheting in RCS piping is performed following scientifically based and generally accepted criteria, these analyses should be performed to the requirements of the following codes and standards :
- safety category 1 : ASME Code* Subsection, article NB-3600 or NB-3200
- safety category 2 : ASME Code* Subsection NC, article NC-3600
- safety category 3 : ASME Code* Subsection ND, article ND-3600
- safety categories 4 & 4A : Swedish Standard SS 064104

(*) ASME Code means : ASME Boiler & Pressure Vessel Code.

### F1R1 - Regulations

### F1R1r - Requirement description

The main Swedish regulation addressing structural integrity is :
"The Swedish Nuclear Power Inspectorate's Regulations Concerning Structural Components in Nuclear Installations, SKIFS 1994 : 1, including changes in accordance with SKIFS 1995 : 1, SKIFS 1996 : 1''. Chapter 2 § 1 states "Structural components in order to be used in a nuclear installation, must be designed, manufactured and installed so that they are able to fulfil all their safety functions reliably during both normal and disturbed operational situations possible during accidents". In this context, the above requirement implies that the design should include fatigue analysis.

### F1P1 -Procedures

### F1P1r - Requirement description

In order to detect for early signs of fatigue damage and to prevent serious fatigue failure, a procedure is required to cover the in-service inspection, repair, and replacement of RCS piping and its integral attachments.

### F1P1R1 - Regulations

### F1P1R1r - Requirement description

The Swedish Nuclear Power Inspectorate's Regulations Concerning Structural Components in Nuclear Installations, SKIFS 1994 : 1, including changes in accordance with SKIFS 1995 : 1, SKIFS 1996 : 1, Chapter 3 § 6 states "Other components, and parts thereof, in inspection group A and an appropriate portion of inspection group B must be inspected at the extent and at such intervals as necessary to maintain adequate safety margins with respect to failure and leakage which could lead to malfunction or release of large amounts of radioactivity and damage that otherwise could lead to ill health or accidents. The interval between in-service inspections may however not exceed ten years".

### F1P1R2 - Regulations

### F1P1R2r - Requirement description

In order to ensure that in-service inspection, repair and replacement are performed following scientifically based and generally accepted criteria, these procedures should be based on the ASME Boiler & Pressure Vessel Code, Section XI, Division 1 (what Edition ?), and in particular its Subsections IWB, IWC and IWD, for piping and safety class 1, 2 and 3 respectively.

### F1P2 - Procedures

### F1P2r - Requirement description

In order to ensure that snubbers will not be the cause of unanticipated fatigue damage to RCS piping, by their inadvertent blockage during normal operation or by their failure to activate under the postulated dynamic loading conditions, a procedure is required to cover the in-service inspection, functional testing, repair and replacement of snubbers installed on the following RCS piping and equipment :
- Pressurizer Safety and Relief Line

### F1P2R1 - Regulations

### F1P2R1r - Requirement description

The Swedish Nuclear Power Inspectorate's Regulations Concerning Structural Components in Nuclear Installations, SKIFS 1994 : 1, including changes in accordance with SKIFS 1995 : 1, SKIFS 1996 : 1, Chapter 3 § 8 states "Snubbers of inspection group A, and an appropriate portion of the snubbers of inspection group B, must be subjected to functional tests to the extent and at such intervals as necessary to ensure that they will function as intended if they are needed. The intervals between tests may however not exceed ten years".

### F1P2R2 - Regulations

### F1P2R2r - Requirement description

In order to ensure that in-service inspection, functional testing, repair and replacement of snubbers in the RCS, are performed following scientifically based an generally accepted criteria, these procedures should be based on the ASME Boiler & Pressure Vessel Code.

### F1P3 - Procedures

### F1P3r - Requirement description

A procedure is required to verify that no structural interferences could arise during plant normal operation, between the RCS System and adjacent structures or systems, that would inhibit the thermal expansion of the RCS System in an unanticipated manner. Such a procedure should be applied whenever modifications (e.g. equipment location, pipe routing) are made to the RCS System or adjacent structures or systems. The procedure should give guidance for corrective actions to remove the interference.

### F2 - Functional requirement

### F2r - Requirement description

While all possible measures may be taken (in design, fabrication, testing, inspection, etc.) to avoid fatigue failure, it is not possible that through-wall fatigue cracks (and thus leakage) could develop over a period of time. Therefore, in order to limit the consequences of through-wall fatigue cracks in RCL piping, measures shall be taken to detect for and locate leaks in RCL piping and prevent such cracks from propagating and causing more serious pressure boundary failure.

### F2S1 - Systems

### F2S1r - Requirement description

A system shall be provided for detecting and, to the extent practical, identifying the location of the source of reactor coolant leakage.

### F2S1R1 -Regulations

### F2S1R1r - Requirement description

The reactor coolant leak detection system should meet the requirements of the USNRC Regulatory Guide.

### F2S1P1 -Procedures

### F2S1P1r - Requirement description

Procedures are required to operate the reactor coolant leak detection system.

### F2P1 - Procedures

### F2P1r - Requirement description

Procedures are required to define corrective actions necessary to mitigate and repair such cracks that may be the cause of reactor coolant leakage.

### F2P1R1 - Regulations

### F2P1R1r - Requirement description

Repair of cracks must conform to the requirements of The Swedish Nuclear Power Inspectorate's Regulations Concerning Structural Components in Nuclear Installations.

As can be deduced from the given example a detailed level of structure can be obtained in the documents. The different subfields enable such a level of detail. The System requirement subfield (FS) gives what function as system has to be provided to avoid or decrease the probability of the failure described by the gate title. System requirements differ significantly from the field requirements (F) which define what has to be achieved. The S field requirements state how it can be done with one or more systems.

A relational database management system is used to store the functional requirement structure. It comprises and controls the access to each field or sub-field that belongs to the structure, including the tree structure itself the gate information and all text fragments. Preferably a graphical user interface as part of a conventional personal computer is used to create and maintain the tree structure and the gate information. Preferably "Gate Views" provide the user with alternate ways to access and display the text fragment structure for a gate. The text fragment structure contains the gate description and all the requirements for the gate. Each requirement is a structure in itself, which may contain substructures for describing the requirements for systems, regulations, analysis, technical specifications, and procedures (see Fig. 5). The graphical user interface is linked with the text fragment editor to provide it with information about the piece of text which has to be edited.

A text fragment editor is also provided which allows the user to edit the text documentation which is attached to a gate. The text information is preferably encoded according to SGML (Standard Generalized Markup Language) and HyTime, two ISO standards. The main advantages for using such standards are that the file format is platform and vendor independent and it is suitable for long term maintenance of the information.

A report generator interfaces directly with the relational database management system in order to produce reports according to complex searching criteria.

Different documents are created and maintained using the method of the present invention and SGML provides a perfect means to share information between different documents without duplication. This means that all documents are updated as soon as the information itself is modified in the central database, which eliminates any risk of using obsolete information.

SGML introduces the notion of a Document Type Definition (DTD) which defines the gate text structure and the hierarchy of document elements. The gate DTD consists of a gate description element and a requirement element. The description element is used for describing the gate concern. The requirement element is used for specifying the requirement description and associated compliance statement for each field or sub-field described above. The gate DTD used in the method according to the present invention for the specific application is shown on Figure 5.

The benefits of using the method according to the present invention are as follows :
- Centralises all plant design bases in a systematic and logical way
- Allows to re-generate all safety related documents : System Descriptions, Technical Specifications, Safety Analysis Report,
- Eases the way to evaluate safety impact of plant changes

## Claims

1. A method for interrelating safety related documents of a production plant, in particular a nuclear power plant, characterised in that said method comprises the following steps :
- identifying activity sources producing an output product which could cause a harmful impact on the environment as well as barriers surrounding said activity sources;
- establishing a fault tree following a cause/consequence activity release path along which the output product would reach said environment, said fault tree comprising said barriers and a set of logic gates and being established by progressive identification along said path of failure causes which could cause the considered barrier to release said output product, each logic gate comprises the logical operator defining the logical link between the failure causes associated with the considered barrier; and
- forming said documents by linking to each gate a description of said failure causes of the associated gate and at least one functional requirement field describing functions required for eliminating said failure cause.

2. A method as claimed in claim 1, characterised in that said activity release path is determined by starting from the environment and going towards a core of the production plant.

3. A method as claimed in claim 1 or 2, wherein said method is applied to a production plant comprising a combination of at least two interrelated barriers which together perform a production process, characterised in that said identification is applied for each of said barriers, and wherein the interrelation between said barriers is considered upon establishing said fault tree.

4. A method as claimed in any one of the claims 1 - 3, characterised in that said fault tree is stored in a digital relational database memory.

5. A method as claimed in any one of the claims 1 - 4, characterised in that to each functional requirement field a sub-field is annexed indicating a compliance extend describing how the associated requirement is met.

6. A method as claimed in any one of the claims 1 - 5, characterised in that to each functional requirement a text tree is linked comprising at least one of the following text fields :
(i) a system text field describing system requirements contributing to mitigate said failure cause associated to the considered gate;
(ii) an analysis text field describing analysis requirements for quantifying the failure consequences;
(iii) a regulation text field indicating the imposed regulatory requirements;
(iv) a technical specification text field listing associated technical specifications;
(v) a procedure text field defining the procedure which contributes to mitigate the failure cause.

7. A method as claimed in claim 6, characterised in that to each of said text fields a pointer is associated pointing towards a requirement and a compliance for the considered text field.

8. A method as claimed in claim 6 or 7, characterised in that said text fields are stored in a relational database memory.
